# EUROPEAN PATENT SPECIFICATION

(11) **EP 4 156 014 B1**
(45) Date of publication and mention of the grant of the patent: **02.12.2026**
(21) Application number: 22181521.0
(22) Date of filing: 28.06.2022
(51) Int. Cl.: G06F 30/34, G06F 113/18, G06F 115/02, G06F 21/64, G06F 21/60, G06F 21/62, G06F 21/44

(54) **INTEGRATED CIRCUIT PACKAGE RECONFIGURATION MECHANISM**
MECHANISMUS ZUR UMKONFIGURATION DES GEHÄUSES EINER INTEGRIERTEN SCHALTUNG
MÉCANISME DE RECONFIGURATION D'UN BOÎTIER DE CIRCUIT INTÉGRÉ

(30) Priority: 22.09.2021 US 202117481734
(43) Date of publication of application: 29.03.2023
(73) Proprietor: INTEL Corporation, Santa Clara, CA 95054 (US)
(72) Inventor: IOVINO, Gregory, Portland, 97229 (US); PILLILLI, Bharat, El Dorado Hills, 95762 (US); PALMER, David, Beaverton, 97006 (US); ROGERS, Philip, Santa Clara, 95054 (US); SHAH, Neel, Billerica, 01821 (US)
(74) Representative: Viering, Jentschura & Partner mbB Patent- und Rechtsanwälte

(56) References cited:
- US-A1- 2021 081 577
- US-A9- 2007 006 150
- US-B1- 7 971 072

## Description

### BACKGROUND OF THE DESCRIPTION

Configuration (or programming) of integrated circuit (IC) packages, such as system on chips (SOCs) entails storing configuration information. However, since the configuration information can only be programmed once, IC packages cannot currently be reprogrammed.

US 2021/0081577 A1 discloses systems and methods for asset management for secure programmable logic devices (PLDs). The system includes a secure PLD including programmable logic blocks arranged in PLD fabric of the secure PLD, and a configuration engine configured to program the PLD fabric according to a configuration image stored in non-volatile memory of the secure PLD and/or coupled through a configuration input/output of the secure PLD. US 7 971 072 B1 discloses a method and a system which includes a trusted loader. An IP core is downloaded from a vendor to a target device. The IP core is received in an encrypted form at the target device, which can be a programmable logic device.

### SUMMARY OF THE INVENTION

According to an aspect of the present invention there is provided a configuration system according to claim 1. According to another aspect of the present invention there is provided a method performed by a configuration system according to claim 5. Additional features for advantageous embodiments of the present invention are provided by the dependent claims.

### BRIEF DESCRIPTION OF THE DRAWINGS

So that the manner in which the above recited features of the present embodiment can be understood in detail, a more particular description of the embodiment, briefly summarized above, may be had by reference to embodiments, some of which are illustrated in the appended drawings. It is to be noted, however, that the appended drawings illustrate only typical embodiments of this embodiment and are therefore not to be considered limiting of its scope, for the embodiment may admit to other equally effective embodiments.
**Figure 1** illustrates one embodiment of a computing device.
**Figure 2** illustrates one embodiment of a platform.
**Figure 3** illustrates one embodiment of a system to program an IC package.
**Figure 4A** is a flow diagram illustrating one embodiment of a process for programming an IC package.
**Figure 4B** illustrates one embodiment of a configuration flow for an IC package.
**Figure 5** is a flow diagram illustrating one embodiment of a manufacturing reconfiguration process for programming an IC package.
**Figure 6** illustrates one embodiment of a schematic diagram of an illustrative electronic computing device.

### DETAILED DESCRIPTION

In the following description, numerous specific details are set forth to provide a more thorough understanding of the present embodiment. However, it will be apparent to one of skill in the art that the present embodiment may be practiced without one or more of these specific details. In other instances, well-known features have not been described in order to avoid obscuring the present embodiment.

In embodiments, a mechanism is provided to reconfigure an IC package to modify package attributes (e.g., stock keeping unit (SKU) attributes). Package configuration is included in a non-volatile storage, which may be configured and reconfigured to modify the package attributes.

References to "one embodiment", "an embodiment", "example embodiment", "various embodiments", etc., indicate that the embodiment(s) so described may include particular features, structures, or characteristics, but not every embodiment necessarily includes the particular features, structures, or characteristics. Further, some embodiments may have some, all, or none of the features described for other embodiments.

In the following description and claims, the term "coupled" along with its derivatives, may be used. "Coupled" is used to indicate that two or more elements cooperate or interact with each other, but they may or may not have intervening physical or electrical components between them.

As used in the claims, unless otherwise specified, the use of the ordinal adjectives "first", "second", "third", etc., to describe a common element, merely indicate that different instances of like elements are being referred to and are not intended to imply that the elements so described must be in a given sequence, either temporally, spatially, in ranking, or in any other manner.

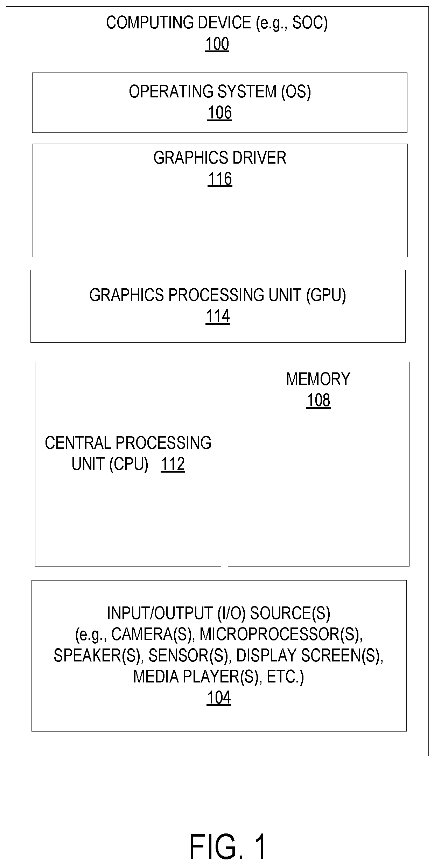

**Figure 1** illustrates one embodiment of a computing device 100. According to one embodiment, computing device 100 comprises a computer platform hosting an integrated circuit ("IC"), such as a system on a chip ("SoC" or "SOC"), integrating various hardware and/or software components of computing device 100 on a single chip. As illustrated, in one embodiment, computing device 100 may include any number and type of hardware and/or software components, such as (without limitation) graphics processing unit 114 ("GPU" or simply "graphics processor"), graphics driver 116 (also referred to as "GPU driver", "graphics driver logic", "driver logic", user-mode driver (UMD), UMD, user-mode driver framework (UMDF), UMDF, or simply "driver"), central processing unit 112 ("CPU" or simply "application processor"), memory 108, network devices, drivers, or the like, as well as input/output (I/O) sources 104, such as touchscreens, touch panels, touch pads, virtual or regular keyboards, virtual or regular mice, ports, connectors, etc. Computing device 100 may include operating system (OS) 106 serving as an interface between hardware and/or physical resources of computing device 100 and a user.

It is to be appreciated that a lesser or more equipped system than the example described above may be preferred for certain implementations. Therefore, the configuration of computing device 100 may vary from implementation to implementation depending upon numerous factors, such as price constraints, performance requirements, technological improvements, or other circumstances.

Embodiments may be implemented as any or a combination of: one or more microchips or integrated circuits interconnected using a parentboard, hardwired logic, software stored by a memory device and executed by a microprocessor, firmware, an application specific integrated circuit (ASIC), and/or a field programmable gate array (FPGA). The terms "logic", "module", "component", "engine", and "mechanism" may include, by way of example, software or hardware and/or a combination thereof, such as firmware.

Embodiments may be implemented using one or more memory chips, controllers, CPUs (Central Processing Unit), microchips or integrated circuits interconnected using a motherboard, an application specific integrated circuit (ASIC), and/or a field programmable gate array (FPGA). The term "logic" may include, by way of example, software or hardware and/or combinations of software and hardware.

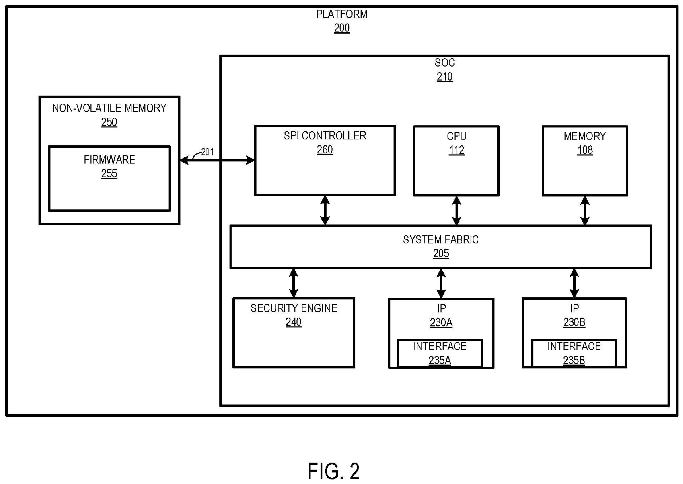

**Figure 2** illustrates one embodiment of a platform 200 including a SOC 210 similar to computing device 100 discussed above. As shown in **Figure 2****,** SOC 210 includes other computing device components (e.g., memory 108 and CPU 112) coupled via a system fabric 205. In one embodiment, system fabric 205 comprises an integrated on-chip system fabric (IOSF) to provide a standardized on-die interconnect protocol for coupling interconnect protocol (IP) agents 230 (e.g., IP agents 230A and 230B) within SOC 210. In such an embodiment, the interconnect protocol provides a standardized interface to enable third parties to design logic such as IP agents to be incorporated in SOC 210.

According to embodiment, IP agents 230 may include general purpose processors (e.g., in-order or out-of-order cores), fixed function units, graphics processors, I/O controllers, display controllers, etc. In such an embodiment, each IP agent 230 includes a hardware interface 235 (e.g., 235A and 235B) to provide standardization to enable the IP agent 230 to communicate with SOC 210 components. For example, in an embodiment in which IP agent 230 is a third-party visual processing unit (VPU), interface 235 provides a standardization to enable the VPU to access memory 108 via fabric 205.

Further, SOC 210 is coupled to a non-volatile memory 250. Non-volatile memory 250 may be implemented as a Peripheral Component Interconnect Express (PCIe) storage drive, such as a solid-state drive (SSD) or Non-Volatile Memory Express (NVMe) drives. In one embodiment, non-volatile memory 250 is implemented to store the platform 200 firmware 255. In one embodiment, SOC 210 is coupled to non-volatile memory 250 via a serial peripheral interface (SPI) 201. In such an embodiment, SOC 210 includes SPI controller 260 coupled between SPI 201 and system fabric 205. In a further embodiment, SPI controller 260 is a flash controller implemented to control access to non-volatile memory 250 via SPI 201.

SOC 210 also includes a security engine 240 that performs various security operations (e.g., security processing, cryptographic functions, etc.) for SOC 210. In one embodiment, security engine 240 comprises an IP agent 230 that is implemented to perform the security operations. In one embodiment, security engine 240 is a cryptographic processor that operates as a root of trust (or platform ROT) to assure the integrity of hardware and software operating on platform 200. As used herein, a ROT is defined as a set of functions in a trusted computing module within a host that is always trusted by the host's operating system (OS). The ROT serves as separate compute engine controlling the trusted computing platform cryptographic processor, such as security engine 240, on platform 200. Although described above with reference to a single SOC 210, other embodiments may implement any number of SOCs 210.

Components within SOC 210 (e.g., CPU 112 or one or more of IP agents 230) comprise an IC package that must be configured prior to being used. As mentioned above, post package configuration currently involves programming fuse bits during manufacturing, which defines operation of the package when used. However, this package configuration cannot currently be modified. As package complexity increases (e.g., with increasingly more dies being integrated in a package), the cost of scrapping a package also increases since failure of one die in a package translates into discarding the package with multiple die). Thus, scrapping an IC package having working components results in significant cost increases.

According to one embodiment, a mechanism is provided to facilitate reconfiguration of an IC package. In such an embodiment, a non-volatile memory is included within the package to store configuration information that includes settings that are implemented to define the operation of integrated circuits within the IC package (e.g., during the package manufacturing process). In a further embodiment, the configuration information comprises a configuration image that is encrypted with an encryption key that is unique to the IC package. In this embodiment, the encryption key may be decrypted only after reading from the non-volatile memory. In yet a further embodiment, the configuration image is signed with a private key associated with the IC package that is verified using a public key associated with the IC package after being read from the non-volatile memory. In still further embodiments, different cryptographic algorithms (or protocols) may be implemented to provide confidentiality, integrity and replay protection of the non-volatile memory.

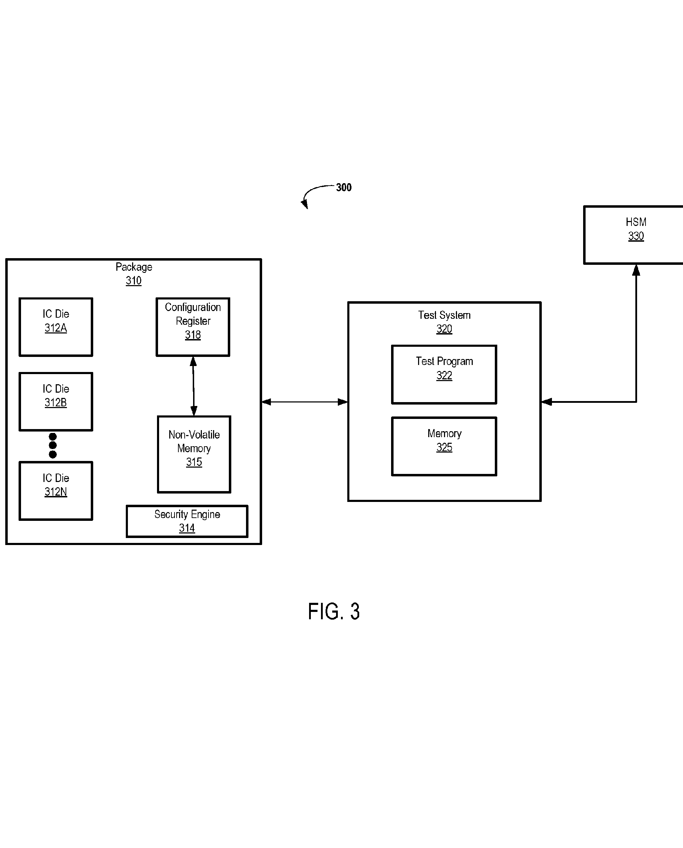

**Figure 3** illustrates one embodiment of a system 300 including a package 310 and a test system 320. As shown in **Figure 3****,** package 310 includes a plurality of IC die (or ICs) 312 (e.g., 312A - 312N), non-volatile memory 315, security engine 314 and configuration register 318. IC die 312 may represent components (e.g., CPU, IPs, security engine, etc.) included in SOC 210 discussed above with regards to **Figure 2****.**

Non-volatile memory 315 is implemented to store package configuration information that includes settings that define the operation of package 310 (e.g., the operation of ICs 312 within package 310. In one embodiment, non-volatile memory 315 comprises a non-volatile random access memory (NVRAM), or other types of persistent storage elements. In a further embodiment, non-volatile memory 315 comprises a complex programmable logic device (CPLD) NVRAM. Configuration register 318 is implemented to store configuration bits received from non-volatile memory 315. The configuration bits represent the final configuration for package 310.

Security engine 314 is a cryptographic processor implemented to provide security for package 310. In one embodiment, security engine 314 facilitates the entry of package 310 into a secure mode to ensure that only authorized users have access to program and update (e.g., reconfigure) the configuration information to non-volatile memory 315. In such an embodiment, the secure mode is entered into using a private key unique to package 310 to unlock the package 310. In one embodiment, the private key is derived using a secret unlock key. Additionally, a hash of the public key is stored package 310. Thus, the private key is to be reconstructed in order to update the product configuration in non-volatile memory 315 from test system 320. In a further embodiment, an Advanced Encryption Standard (AES) symmetric key for encrypting and decrypting the product configuration is also stored in package 310. Although shown in **Figure 3** as being a stand-alone component, other embodiments may feature a separate security engine 314 within each IC die 312.

During system boot, package 310 comes out of reset and derives its keys. Subsequently, security engine 314 reads the data from the non-volatile memory 315, authenticates the data, performs security checks, and decrypts it using the stored encryption key. The configuration information may then be populated in configuration register 318 as configuration bits. The reset is then completed to allow the configuration to propagate to the rest of the die.

Test system 320 includes a test program 322 that loads package configuration information non-volatile memory 315 and a memory 325 to store received encryption keys received from a high security module (HSM) 330. In one embodiment, the non-volatile memory 315 programming process is similar to the reprogramming process. As a result, a single test program 322 may be implemented to manage the installation of original package 310 programming as well as programming to perform reconfiguration.

HSM 330 comprises a computing device including one or more cryptographic processors that generates and stores cryptographic keys that are to be used in system 300. In one embodiment, HSM 330 stores an unlock key that is used to program non-volatile memory 315. In such an embodiment, test system 320 acquires the unlock key from HSM 330 to facilitate programming non-volatile memory 315. Thus, non-volatile memory 315 cannot be programmed/reprogrammed without authentication of test system 320 (or any other entity) via the unlock key, which prevents an unauthorized configuration of non-volatile memory 315.

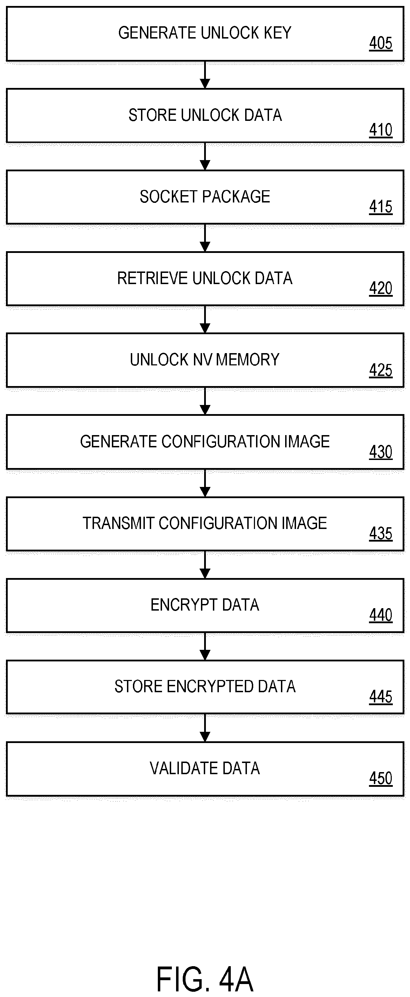

**Figure 4A** is a flow diagram illustrating one embodiment of a process for programming an IC package. At processing block 405, an unlock key is generated for the package. In one embodiment, the unlock key is generated using seed bits received from the HSM to generate a unique key associated with the IC package. However, other embodiments may implement different mechanisms to generate the unlock key. At processing block 410, the unlock key and a unique identifier associated with the IC package are stored into the HSM as unlock data for later use. In one embodiment, processing blocks 405 and 410 are performed only during original programming of the IC package.

At processing block 415, the IC package is inserted into a socket for configuration (or reconfiguration). At processing block 420, the test system retrieves the unlock data from the HSM. At processing block 425, the test system uses the unlock data to unlock the IC package. As discussed above, the test system is precluded from accessing the IC package without the unlock data associated with the IC package.

At processing block 430, the test program generates a configuration image that is used to program the IC package. In one embodiment, generating the configuration image comprises generating a package fuse image that is fused into the IC package. During the reprogramming process, the IC package verifies the value of the generated image to determine whether the value is equal to a value associated with a previously stored image. According to the present invention, the test program generates a string image for configuration programming of the non-volatile memory. The test program compresses the string image prior to transmission to the IC package.

At processing block 435, the configuration image is transmitted to the IC package for the programming of the non-volatile memory. At processing block 440, the IC package manages encryption of the compressed data (e.g., via using AES). At processing block 445, the encrypted compressed data is stored in the non-volatile memory. At processing block 450, the non-volatile memory program is validated to confirm that it has been programmed correctly (e.g., determine whether the configuration information received from the non-volatile memory matches the configuration image generated by the test system).

According to the present invention, data is transmitted from the non-volatile memory to the security engine. Subsequently, the security engine decrypts and decompresses the data and then transmits the decrypted/uncompressed data to the test program, where the program is validated to check the programmed image. Decryption and decompression enables an end to end check of the non-volatile memory data for a final configuration into the IC package's configuration register. The test program may reprogram the non-volatile memory upon a determination that the data within the non-volatile memory is incorrect.

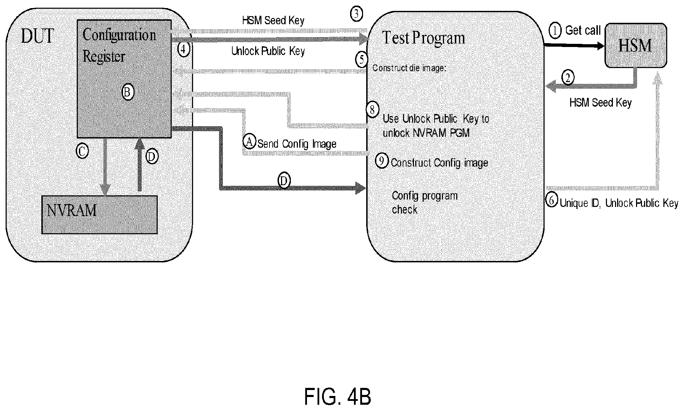

**Figure 4B** illustrates another embodiment of a configuration flow for an IC package. As shown in **Figure 4B****,** an unlock key is generated for the package using seed bits received from an HSM to generate a unique key associated with the IC package and the unlock key and a unique identifier associated with the IC package are stored into the HSM as unlock data for later use. Subsequently, the test system retrieves the unlock data from the HSM and uses the unlock data to unlock the IC package. The test program then generates a configuration image and transmits the configuration image to the IC package for the programming of the non-volatile memory. The IC package manages encryption of the compressed data and stores the encrypted compressed data in the non-volatile memory. Finally, the non-volatile memory program is validated to confirm that it has been programmed correctly.

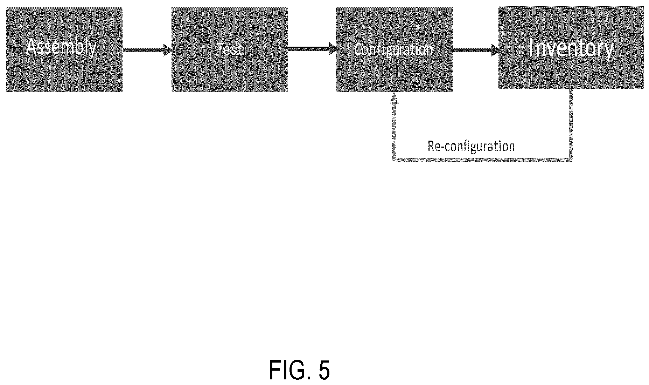

**Figure 5** is a flow diagram illustrating one embodiment of a manufacturing reconfiguration process for programming an IC package. As shown in **Figure 5****,** the package is assembled, tested configured, and placed into inventory. Subsequently, the package may be reconfigured after being placed into inventory.

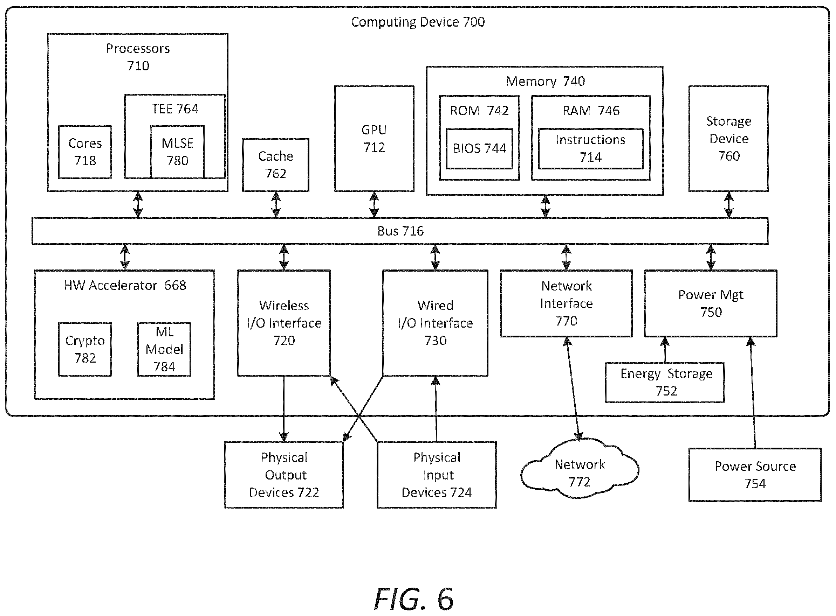

**Figure 6** is a schematic diagram of an illustrative electronic computing device to enable enhanced protection against adversarial attacks according to some embodiments. In some embodiments, the computing device 700 includes one or more processors 710 including one or more processors cores 718 and a TEE 764, the TEE including a machine learning service enclave (MLSE) 780. In some embodiments, the computing device 700 includes a hardware accelerator 768, the hardware accelerator including a cryptographic engine 782 and a machine learning model 784. In some embodiments, the computing device is to provide enhanced protections against ML adversarial attacks, as provided in **Figures 1-5****.**

The computing device 700 may additionally include one or more of the following: cache 762, a graphical processing unit (GPU) 712 (which may be the hardware accelerator in some implementations), a wireless input/output (I/O) interface 720, a wired I/O interface 730, memory circuitry 740, power management circuitry 750, non-transitory storage device 760, and a network interface 770 for connection to a network 772. The following discussion provides a brief, general description of the components forming the illustrative computing device 700. Example, non-limiting computing devices 700 may include a desktop computing device, blade server device, workstation, or similar device or system.

In embodiments, the processor cores 718 are capable of executing machine-readable instruction sets 714, reading data and/or instruction sets 714 from one or more storage devices 760 and writing data to the one or more storage devices 760. Those skilled in the relevant art will appreciate that the illustrated embodiments as well as other embodiments may be practiced with other processor-based device configurations, including portable electronic or handheld electronic devices, for instance smartphones, portable computers, wearable computers, consumer electronics, personal computers ("PCs"), network PCs, minicomputers, server blades, mainframe computers, and the like.

The processor cores 718 may include any number of hardwired or configurable circuits, some or all of which may include programmable and/or configurable combinations of electronic components, semiconductor devices, and/or logic elements that are disposed partially or wholly in a PC, server, or other computing system capable of executing processor-readable instructions.

The computing device 700 includes a bus or similar communications link 716 that communicably couples and facilitates the exchange of information and/or data between various system components including the processor cores 718, the cache 762, the graphics processor circuitry 712, one or more wireless I/O interfaces 720, one or more wired I/O interfaces 730, one or more storage devices 760, and/or one or more network interfaces 770. The computing device 700 may be referred to in the singular herein, but this is not intended to limit the embodiments to a single computing device 700, since in certain embodiments, there may be more than one computing device 700 that incorporates, includes, or contains any number of communicably coupled, collocated, or remote networked circuits or devices.

The processor cores 718 may include any number, type, or combination of currently available or future developed devices capable of executing machine-readable instruction sets.

The processor cores 718 may include (or be coupled to) but are not limited to any current or future developed single- or multi-core processor or microprocessor, such as: on or more systems on a chip (SOCs); central processing units (CPUs); digital signal processors (DSPs); graphics processing units (GPUs); application-specific integrated circuits (ASICs), programmable logic units, field programmable gate arrays (FPGAs), and the like. Unless described otherwise, the construction and operation of the various blocks shown in **Figure 6** are of conventional design. Consequently, such blocks need not be described in further detail herein, as they will be understood by those skilled in the relevant art. The bus 716 that interconnects at least some of the components of the computing device 700 may employ any currently available or future developed serial or parallel bus structures or architectures.

The system memory 740 may include read-only memory ("ROM") 742 and random-access memory ("RAM") 746. A portion of the ROM 742 may be used to store or otherwise retain a basic input/output system ("BIOS") 744. The BIOS 744 provides basic functionality to the computing device 700, for example by causing the processor cores 718 to load and/or execute one or more machine-readable instruction sets 714. In embodiments, at least some of the one or more machine-readable instruction sets 714 cause at least a portion of the processor cores 718 to provide, create, produce, transition, and/or function as a dedicated, specific, and particular machine, for example a word processing machine, a digital image acquisition machine, a media playing machine, a gaming system, a communications device, a smartphone, or similar.

The computing device 700 may include at least one wireless input/output (I/O) interface 720. The at least one wireless I/O interface 720 may be communicably coupled to one or more physical output devices 722 (tactile devices, video displays, audio output devices, hardcopy output devices, etc.). The at least one wireless I/O interface 720 may communicably couple to one or more physical input devices 724 (pointing devices, touchscreens, keyboards, tactile devices, etc.). The at least one wireless I/O interface 720 may include any currently available or future developed wireless I/O interface. Example wireless I/O interfaces include, but are not limited to: BLUETOOTH^{®}, near field communication (NFC), and similar.

The computing device 700 may include one or more wired input/output (I/O) interfaces 730. The at least one wired I/O interface 730 may be communicably coupled to one or more physical output devices 722 (tactile devices, video displays, audio output devices, hardcopy output devices, etc.). The at least one wired I/O interface 730 may be communicably coupled to one or more physical input devices 724 (pointing devices, touchscreens, keyboards, tactile devices, etc.). The wired I/O interface 730 may include any currently available or future developed I/O interface. Example wired I/O interfaces include but are not limited to: universal serial bus (USB), IEEE 1394 ("FireWire"), and similar.

The computing device 700 may include one or more communicably coupled, non-transitory, data storage devices 760. The data storage devices 760 may include one or more hard disk drives (HDDs) and/or one or more solid-state storage devices (SSDs). The one or more data storage devices 760 may include any current or future developed storage appliances, network storage devices, and/or systems. Non-limiting examples of such data storage devices 760 may include, but are not limited to, any current or future developed non-transitory storage appliances or devices, such as one or more magnetic storage devices, one or more optical storage devices, one or more electro-resistive storage devices, one or more molecular storage devices, one or more quantum storage devices, or various combinations thereof. In some implementations, the one or more data storage devices 760 may include one or more removable storage devices, such as one or more flash drives, flash memories, flash storage units, or similar appliances or devices capable of communicable coupling to and decoupling from the computing device 700.

The one or more data storage devices 760 may include interfaces or controllers (not shown) communicatively coupling the respective storage device or system to the bus 716. The one or more data storage devices 760 may store, retain, or otherwise contain machine-readable instruction sets, data structures, program modules, data stores, databases, logical structures, and/or other data useful to the processor cores 718 and/or graphics processor circuitry 712 and/or one or more applications executed on or by the processor cores 718 and/or graphics processor circuitry 712. In some instances, one or more data storage devices 760 may be communicably coupled to the processor cores 718, for example via the bus 716 or via one or more wired communications interfaces 730 (e.g., Universal Serial Bus or USB); one or more wireless communications interfaces 720 (e.g., Bluetooth^{®}, Near Field Communication or NFC); and/or one or more network interfaces 770 (IEEE 802.3 or Ethernet, IEEE 802.11, or Wi-Fi^{®}, etc.).

Processor-readable instruction sets 714 and other programs, applications, logic sets, and/or modules may be stored in whole or in part in the system memory 740. Such instruction sets 714 may be transferred, in whole or in part, from the one or more data storage devices 760. The instruction sets 714 may be loaded, stored, or otherwise retained in system memory 740, in whole or in part, during execution by the processor cores 718 and/or graphics processor circuitry 712.

The computing device 700 may include power management circuitry 750 that controls one or more operational aspects of the energy storage device 752. In embodiments, the energy storage device 752 may include one or more primary (i.e., non-rechargeable) or secondary (i.e., rechargeable) batteries or similar energy storage devices. In embodiments, the energy storage device 752 may include one or more supercapacitors or ultracapacitors. In embodiments, the power management circuitry 750 may alter, adjust, or control the flow of energy from an external power source 754 to the energy storage device 752 and/or to the computing device 700. The power source 754 may include, but is not limited to, a solar power system, a commercial electric grid, a portable generator, an external energy storage device, or any combination thereof.

For convenience, the processor cores 718, the graphics processor circuitry 712, the wireless I/O interface 720, the wired I/O interface 730, the storage device 760, and the network interface 770 are illustrated as communicatively coupled to each other via the bus 716, thereby providing connectivity between the above-described components. In alternative embodiments, the above-described components may be communicatively coupled in a different manner than illustrated in **Figure 6****.** For example, one or more of the above-described components may be directly coupled to other components, or may be coupled to each other, via one or more intermediary components (not shown). In another example, one or more of the above-described components may be integrated into the processor cores 718 and/or the graphics processor circuitry 712. In some embodiments, all or a portion of the bus 716 may be omitted and the components are coupled directly to each other using suitable wired or wireless connections.

Embodiments may be provided, for example, as a computer program product which may include one or more transitory or non-transitory machine-readable storage media having stored thereon machine-executable instructions that, when executed by one or more machines such as a computer, network of computers, or other electronic devices, may result in the one or more machines carrying out operations in accordance with embodiments described herein. A machine-readable medium may include, but is not limited to, floppy diskettes, optical disks, CD-ROMs (Compact Disc-Read Only Memories), and magneto-optical disks, ROMs, RAMs, EPROMs (Erasable Programmable Read Only Memories), EEPROMs (Electrically Erasable Programmable Read Only Memories), magnetic or optical cards, flash memory, or other type of media/machine-readable medium suitable for storing machine-executable instructions.

## Claims

1. A configuration system comprising:
an integrated circuit, IC, package (310) including:
a plurality of ICs (312A, 312B, 312N);
a non-volatile memory (250, 315) configured to store encrypted and compressed configuration information, the configuration information comprising settings that define an operation of the plurality of ICs (312A, 312B, 312N);
a security engine (240, 314) being a cryptographic processor implemented to provide security for the IC package (310), wherein the security engine (314) is configured to decrypt and decompress the encrypted and compressed configuration information received from the non-volatile memory (250, 315); and a configuration register (318) configured to receive from the security engine (240, 314) decrypted and decompressed configuration information representing a final configuration for the IC package (310); and
a test system (320) configured to generate as configuration information a string image, compress the string image and transmit the compressed string image as non-encrypted compressed configuration information to the IC package (310);
wherein the IC package (310) is configured to receive the non-encrypted compressed configuration information from the test system (320);
wherein the cryptographic processor is configured to encrypt the non-encrypted compressed configuration information (440) received from the test system (320) and store the encrypted compressed configuration information as data in the non-volatile memory (315);
wherein the security engine (314) is further configured to transmit the decrypted and decompressed data as configuration information to the test system (320); and
wherein the test system (320) is further configured to validate the received decrypted and decompressed data by determining whether the decrypted and decompressed data received from the security engine (240, 314) matches the configuration information generated by the test system (320).

2. The configuration system of claim 1, wherein the cryptographic processor is further configured to authenticate the test system (320) to secure access to the non-volatile memory (250, 315).

3. The configuration system of claim 2, wherein the cryptographic processor is further configured to receive unlock data from the test system (320) and unlock the non-volatile memory (250, 315) in response to receiving the unlock data.

4. The configuration system of claim 3, wherein the unlock data comprises an unlock key and unique information associated with the IC package (310).

5. A method performed by a configuration system which comprises an integrated circuit, IC, package (310) including:
a plurality of ICs (312A, 312B, 312N);
a non-volatile memory (250, 315) storing encrypted and compressed configuration information, the configuration information comprising settings that define an operation of the plurality of ICs (312A, 312B, 312N);
a security engine (240, 314) being a cryptographic processor implemented to provide security for the IC package (310), wherein the security engine (240, 314) decrypts and decompresses the encrypted and compressed configuration information received from the non-volatile memory (250, 315); and
a configuration register (318) receiving from the security engine (240, 314) decrypted and decompressed configuration information representing a final configuration for the IC package (310); and
a test system (320);
the method comprising:
generating by the test system a string image as configuration information,
compressing the string image and transmitting the compressed string image as non-encrypted compressed configuration information to the IC package (310);
receiving by the IC package (310) the non-encrypted compressed configuration information from the test system (320);
encrypting by the cryptographic processor the non-encrypted compressed configuration information (440) received from the test system (320) and storing the encrypted compressed configuration information as data in the non-volatile memory (315);
transmitting by the security engine (314) the decrypted and
decompressed data as configuration information to the test system (320); and
validating by the test system (320) the received decrypted and decompressed data by determining whether the decrypted and decompressed data received from security engine (240, 314) matches the configuration information generated by the test system.

6. The method of claim 5, further comprising authenticating the test system (320).

7. The method of claim 6, wherein authenticating the test system (320) comprises:
receiving unlock data from the test system (320); and
unlocking a public key (425) in response to receiving the unlock data.

8. The method of claim 7, wherein the unlock data comprises an unlock key and unique information associated with the IC package (310).

9. At least one computer readable medium having instructions stored thereon, which when executed by one or more processors, cause the processors to perform the method of any one of claims 5-8.

## Patentansprüche

1. Konfigurationssystem, umfassend:
ein Integriertes-Schaltkreis(IC)-Gehäuse (310), das aufweist:
eine Mehrzahl von ICs (312A, 312B, 312N);
einen nichtflüchtigen Speicher (250, 315), der dazu ausgelegt ist, dass darin verschlüsselte und komprimierte Konfigurationsinformationen gespeichert werden, wobei die Konfigurationsinformationen Einstellungen umfassen, die einen Betrieb der Mehrzahl von ICs (312A, 312B, 312N) definieren;
eine Sicherheits-Engine (240, 314), die ein Kryptografieprozessor ist, der dazu implementiert ist, Sicherheit für das IC-Gehäuse (310) bereitzustellen, wobei die Sicherheits-Engine (314) dazu ausgelegt ist, die verschlüsselten und komprimierten Konfigurationsinformationen, die von dem nichtflüchtigen Speicher (250, 315) empfangen werden, zu entschlüsseln und zu dekomprimieren; und ein Konfigurationsregister (318), das dazu ausgelegt ist, entschlüsselte und dekomprimierte Konfigurationsinformationen, die eine endgültige Konfiguration für das IC-Gehäuse (310) repräsentieren, von der Sicherheits-Engine (240, 314) zu empfangen
ein Testsystem (320), das dazu ausgelegt ist, als Konfigurationsinformationen ein Zeichenfolgenbild zu erzeugen, das Zeichenfolgenbild zu komprimieren und das komprimierte Zeichenfolgenbild als nicht verschlüsselte, komprimierte Konfigurationsinformationen an das IC-Gehäuse (310) zu übertragen;
wobei das IC-Gehäuse (310) dazu ausgelegt ist, die nicht verschlüsselten, komprimierten Konfigurationsinformationen von dem Testsystem (320) zu empfangen;
wobei der Kryptografieprozessor dazu ausgelegt ist, die nicht verschlüsselten, komprimierten Konfigurationsinformationen (440), die von dem Testsystem (320) empfangen werden, zu verschlüsseln und die verschlüsselten, komprimierten Konfigurationsinformationen als Daten in dem nichtflüchtigen Speicher (315) zu speichern;
wobei die Sicherheits-Engine (314) ferner dazu ausgelegt ist, die entschlüsselten und dekomprimierten Daten als Konfigurationsinformationen an das Testsystem (320) zu übertragen; und
wobei das Testsystem (320) ferner dazu ausgelegt ist, die empfangenen entschlüsselten und dekomprimierten Daten zu validieren, indem bestimmt wird, ob die entschlüsselten und dekomprimierten Daten, die von der Sicherheits-Engine (240, 314) empfangen werden, mit den Konfigurationsinformationen übereinstimmen, die durch das Testsystem (320) erzeugt wurden.

2. Konfigurationssystem nach Anspruch 1, wobei der Kryptografieprozessor ferner dazu ausgelegt ist, das Testsystem (320) zu authentifizieren, um Zugriff auf den nichtflüchtigen Speicher (250, 315) zu sichern.

3. Konfigurationssystem nach Anspruch 2, wobei der Kryptografieprozessor ferner dazu ausgelegt ist, Entsperrdaten von dem Testsystem (320) zu empfangen und den nichtflüchtigen Speicher (250, 315) in Reaktion auf das Empfangen der Entsperrdaten zu entsperren.

4. Konfigurationssystem nach Anspruch 3, wobei die Entsperrdaten einen Entsperrschlüssel und eindeutige Informationen, die dem IC-Gehäuse (310) zugewiesen sind, umfassen.

5. Verfahren, das durch ein Konfigurationssystem durchgeführt wird, das ein Integriertes-Schaltkreis(IC)-Gehäuse (310) umfasst, das aufweist:
eine Mehrzahl von ICs (312A, 312B, 312N);
einen nichtflüchtigen Speicher (250, 315), in dem verschlüsselte und komprimierte Konfigurationsinformationen gespeichert werden, wobei die Konfigurationsinformationen Einstellungen umfassen, die einen Betrieb der Mehrzahl von ICs (312A, 312B, 312N) definieren;
eine Sicherheits-Engine (240, 314), die ein Kryptografieprozessor ist, der implementiert ist, um Sicherheit für das IC-Gehäuse (310) bereitzustellen, wobei die Sicherheits-Engine (240, 314) die verschlüsselten und komprimierten Konfigurationsinformationen, die von dem nichtflüchtigen Speicher (250, 315) empfangen werden, entschlüsselt und dekomprimiert; und
ein Konfigurationsregister (318), das von der Sicherheits-Engine (240, 314) entschlüsselte und dekomprimierte Konfigurationsinformationen empfängt, die eine endgültige Konfiguration für das IC-Gehäuse (310) repräsentieren; und
ein Testsystem (320);
das Verfahren umfassend:
Erzeugen, durch das Testsystem, eines Zeichenfolgenbilds als Konfigurationsinformationen, Komprimieren des Zeichenfolgenbilds und Übertragen des komprimierten Zeichenfolgenbilds als nicht verschlüsselte, komprimierte Konfigurationsinformationen an das IC-Gehäuse (310);
Empfangen, durch das IC-Gehäuse (310), der nicht verschlüsselten, komprimierten Konfigurationsinformationen von dem Testsystem (320);
Verschlüsseln, durch den Kryptografieprozessor, der nicht verschlüsselten, komprimierten Konfigurationsinformationen (440), die von dem Testsystem (320) empfangen werden, und Speichern der verschlüsselten, komprimierten Konfigurationsinformationen als Daten in dem nichtflüchtigen Speicher (315);
Übertragen, durch die Sicherheits-Engine (314), der entschlüsselten und dekomprimierten Daten als Konfigurationsinformationen an das Testsystem (320); und Validieren, durch das Testsystem (320), der empfangenen entschlüsselten und dekomprimierten Daten, indem bestimmt wird, ob die entschlüsselten und dekomprimierten Daten, die von der Sicherheits-Engine (240, 314) empfangen werden, mit den Konfigurationsinformationen übereinstimmen, die durch das Testsystem erzeugt wurden.

6. Verfahren nach Anspruch 5, ferner umfassend das Authentifizieren des Testsystems (320).

7. Verfahren nach Anspruch 6, wobei das Authentifizieren des Testsystems (320) umfasst:
Empfangen von Entsperrdaten vom Testsystem (320); und
Entsperren eines öffentlichen Schlüssels (425) als Reaktion auf das Empfangen der Entsperrdaten.

8. Verfahren nach Anspruch 7, wobei die Entsperrdaten einen Entsperrschlüssel und eindeutige Informationen, die dem IC-Gehäuse (310) zugewiesen sind, umfassen.

9. Mindestens ein computerlesbares Medium, das Anweisungen aufweist, die darin gespeichert sind und die, wenn sie von einem oder mehreren Prozessoren ausgeführt werden, die Prozessoren veranlassen, das Verfahren nach einem der Ansprüche 5-8 durchzuführen.

## Revendications

1. Système de configuration comprenant :
un boîtier de circuit intégré, IC (310) comportant :
une pluralité d'IC (312A, 312B, 312N) ;
une mémoire non volatile (250, 315) configurée pour stocker des informations de configuration chiffrées et compressées, les informations de configuration comprenant des réglages qui définissent un fonctionnement de la pluralité d'IC (312A, 312B, 312N) ;
un moteur de sécurité (240, 314) qui est un processeur cryptographique mis en œuvre pour assurer la sécurité du boîtier IC (310), le moteur de sécurité (314) étant configuré pour déchiffrer et décompresser les informations de configuration chiffrées et compressées reçues de la mémoire non volatile (250, 315) ; et un registre de configuration (318) configuré pour recevoir du moteur de sécurité (240, 314) des informations de configuration déchiffrées et décompressées représentant une configuration finale du boîtier IC (310) ; et
un système de test (320) configuré pour générer en tant qu'informations de configuration une image de chaîne, compresser l'image de chaîne et transmettre l'image de chaîne compressée en tant qu'informations de configuration compressées non chiffrées au boîtier IC (310) ;
dans lequel le boîtier IC (310) est configuré pour recevoir les informations de configuration compressées non chiffrées en provenance du système de test (320) ;
dans lequel le processeur cryptographique est configuré pour chiffrer les informations de configuration compressées non chiffrées (440) reçues du système de test (320) et stocker les informations de configuration compressées chiffrées sous forme de données dans la mémoire non volatile (315) ;
dans lequel le moteur de sécurité (314) est en outre configuré pour transmettre les données déchiffrées et décompressées en tant qu'informations de configuration au système de test (320) ; et
dans lequel le système de test (320) est en outre configuré pour valider les données déchiffrées et décompressées reçues en déterminant si les données déchiffrées et décompressées reçues du moteur de sécurité (240, 314) correspondent aux informations de configuration générées par le système de test (320).

2. Système de configuration selon la revendication 1, dans lequel le processeur cryptographique est en outre configuré pour authentifier le système de test (320) afin de sécuriser l'accès à la mémoire non volatile (250, 315).

3. Système de configuration selon la revendication 2, dans lequel le processeur cryptographique est en outre configuré pour recevoir des données de déverrouillage en provenance du système de test (320) et déverrouiller la mémoire non volatile (250, 315) en réponse à la réception des données de déverrouillage.

4. Système de configuration selon la revendication 3, dans lequel les données de déverrouillage comprennent une clé de déverrouillage et des informations uniques associées au boîtier IC (310).

5. Procédé mis en œuvre par un système de configuration qui comprend un boîtier de circuit intégré, IC (310), comportant :
une pluralité d'IC (312A, 312B, 312N) ;
une mémoire non volatile (250, 315) stockant des informations de configuration chiffrées et compressées, les informations de configuration comprenant des réglages qui définissent un fonctionnement de la pluralité d'IC (312A, 312B, 312N) ;
un moteur de sécurité (240, 314) qui est un processeur cryptographique mis en œuvre pour assurer la sécurité du boîtier IC (310), dans lequel le moteur de sécurité (240, 314) déchiffre et décompresse les informations de configuration chiffrées et compressées reçues de la mémoire non volatile (250, 315) ; et
un registre de configuration (318) recevant du moteur de sécurité (240, 314) des informations de configuration déchiffrées et décompressées représentant une configuration finale pour le boîtier IC (310) ; et
un système de test (320) ;
le procédé comprenant les étapes suivantes :
la génération par le système de test d'une image de chaîne en tant qu'informations de configuration, la compression de l'image de chaîne et la transmission de l'image de chaîne compressée en tant qu'informations de configuration compressées non chiffrées au boîtier IC (310) ;
la réception par le boîtier IC (310) des informations de configuration compressées non chiffrées en provenance du système de test (320) ;
le chiffrage par le processeur cryptographique des informations de configuration compressées non chiffrées (440) reçues du système de test (320) et le stockage des informations de configuration compressées chiffrées sous forme de données dans la mémoire non volatile (315) ;
la transmission par le moteur de sécurité (314) des données déchiffrées et décompressées en tant qu'informations de configuration au système de test (320) ; et
la validation par le système de test (320) des données déchiffrées et décompressées reçues en déterminant si les données déchiffrées et décompressées reçues du moteur de sécurité (240, 314) correspondent aux informations de configuration générées par le système de test.

6. Procédé selon la revendication 5, comprenant en outre l'authentification du système de test (320).

7. Procédé selon la revendication 6, dans lequel l'authentification du système de test (320) comprend :
la réception de données de déverrouillage en provenance du système de test (320) ; et
le déverrouillage d'une clé publique (425) en réponse à la réception des données de déverrouillage.

8. Procédé selon la revendication 7, dans lequel les données de déverrouillage comprennent une clé de déverrouillage et des informations uniques associées au boîtier IC (310).

9. Au moins un support lisible par ordinateur sur lequel sont stockées des instructions qui, lorsqu'elles sont exécutées par un ou plusieurs processeurs, amènent les processeurs à mettre en œuvre le procédé selon l'une quelconque des revendications 5 à 8.
